(19) Europäisches Patentamt
European Patent Office
Office européen des brevets

(11) **EP 3 540 829 A1**

(12) **EUROPEAN PATENT APPLICATION**
published in accordance with Art. 153(4) EPC

(43) Date of publication:
**18.09.2019 Bulletin 2019/38**

(51) Int Cl.:
*H01M 4/36* $^{(2006.01)}$  *H01M 4/133* $^{(2010.01)}$
*H01M 4/134* $^{(2010.01)}$  *H01M 4/38* $^{(2006.01)}$
*H01M 4/48* $^{(2010.01)}$  *H01M 4/587* $^{(2010.01)}$

(21) Application number: **17870224.7**

(22) Date of filing: **27.10.2017**

(86) International application number:
**PCT/JP2017/038932**

(87) International publication number:
**WO 2018/088248 (17.05.2018 Gazette 2018/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.11.2016 JP 2016220538**

(71) Applicants:
• **Showa Denko K.K.
Tokyo 105-8518 (JP)**

• **Umicore
1000 Brussels (BE)**

(72) Inventors:
• **YAMAMOTO Ryuji
Tokyo 105-8518 (JP)**
• **OTSUKA Yasunari
Tokyo 105-8518 (JP)**

(74) Representative: **Strehl Schübel-Hopf & Partner
Maximilianstrasse 54
80538 München (DE)**

(54) **NEGATIVE ELECTRODE MATERIAL AND LITHIUM-ION BATTERY**

(57)    The present invention relates to a negative electrode material comprising silicon nanoparticles, amorphous carbon and graphite,
wherein a 10% particle diameter ($D_{10}$) in a volume-based cumulative particle size distribution is from 3.5 $\mu$m to 9 $\mu$m, graphite particles,
wherein a BET specific surface area is from 1 m$^2$/g to 5 m$^2$/g,
wherein a ratio (A/B) of the peak area (A) in the vicinity of 99 eV derived from Si to the peak area (B) in the vicinity of 105 eV derived from a silicon oxide observed by X-ray photoelectron spectroscopy is 0.01 to 0.10,
and comprising composite particles, in which amorphous carbon comprising silicon nanoparticles are attached to the surface of the graphite particles; and a lithium-ion battery using the negative electrode material. The negative electrode material of the present invention has a high discharge capacity of 600 mAh/g or more, a high initial coulombic efficiency, and a high cycle characteristic, and thereby ensures improvement in the properties (initial coulombic efficiency and cycle characteristic) of a lithium-ion battery using the negative electrode material.

Fig. 6

(A)                    (B)

EP 3 540 829 A1

**Description**

Technical Field

The present invention relates to a negative electrode material, and a lithium ion battery using the negative electrode material.

Background Art

A negative electrode active material exhibiting both a high capacity and a high power is required for a battery (secondary battery) to be used in, for example, IT equipment, such as a smart phone or a tablet PC, a vacuum cleaner, a power tool, an electric bicycle, a drone, or a vehicle. Silicon (theoretical capacity: 4,200 mAh/g), which has a higher theoretical capacity than that of currently used graphite (theoretical capacity: 372 mAh/g), has attracted attention as the negative electrode active material.

However, it has been known that a lithium ion battery using silicon has remarkably low cycle characteristics because silicon is expanded up to about three times to about four times its original volume and is self-destroyed along with intercalation of lithium, and silicon is peeled off from an electrode.

As a method of improving the cycle characteristics, following methods have been disclosed: a method of heat mixing graphite powder, a carbon precursor, silicon fine powder and a void-forming agent, followed by firing, to thereby form voids around the silicon fine powder to absorb the volume variation (Japanese Patent No. 5158460; Patent Document 1); a method of firing a mixture of a silicon compound fine powder, graphite and a binder to thereby fix the silicon compound with a carbide of the binder to suppress release of the silicon compound (JP 2003-223892 A; Patent Document 2); and a method of mixing a silicon compound and a conductive carbon, subjecting the mixture to mixing treatment in which a compression force and a shear force are applied to the mixture, and forming particles in which the silicon compound and the conductive carbon are uniformly dispersed and firmly aggregated to thereby efficiently suppress the volume variation at the time of charge and discharge (Patent No. 5809200; Patent Document 3).

Prior Art

Patent Document

    [PTL 1] JP 5158460 B2
    [PTL 2] JP 2003-223892 A
    [PTL 3] JP 5809200 B2

Summary of Invention

Technical Problem

According to the method of the Patent Document 1, voids are formed around the silicon fine powder and therefore an electrically conductive path to the silicon fine powder cannot be formed.

According to the method of the Patent Document 2, in the case of obtaining a negative electrode active material having a high capacity, the material has a high ratio of the silicon compound fine powder and graphite which serve as a filler to the binder serving as a matrix, and therefore the surface of the filler cannot be sufficiently coated with the binder.

It has been known that, when a carbon material and a silicon compound are subjected to mechanochemical treatment in which a compression force and a shear force are applied to them as in Patent Document 3, part of the silicon compound is converted into silicon carbide. Among silicon compounds, silicon carbide contributes less to charge and discharge, and hence the method of Patent Document 3 causes a reduction in capacity of the negative electrode active material.

An object of the present invention is to provide a negative electrode material exhibiting a high initial discharge capacity of 600 mAh/g or more, high initial coulombic efficiency, and high cycle characteristics, and a lithium ion battery using the negative electrode material.

Solution to Problem

That is, the present invention comprises the following negative electrode material, negative electrode paste using the negative electrode material, negative electrode sheet, and lithium ion battery.

[1] A negative electrode material comprising silicon nanoparticles, amorphous carbon and graphite,
wherein a 10% particle diameter ($D_{10}$) in a volume-based cumulative particle size distribution is from 3.5 $\mu$m to 9 $\mu$m,
wherein a BET specific surface area is from 1 $m^2$/g to 5 $m^2$/g,
wherein a ratio (A/B) of the peak area (A) in the vicinity of 99 eV derived from Si to the peak area (B) in the vicinity of 103 eV derived from a silicon oxide observed by X-ray photoelectron spectroscopy is 0.01 to 0.10,
and comprising composite particles, in which amorphous carbon comprising silicon nanoparticles are attached to the surface of the graphite particles.
[2] The negative electrode material according to [1] above,
wherein a 50% particle diameter ($D_{50}$) in a volume-based cumulative particle size distribution is from 8 $\mu$m to 25 $\mu$m; and
wherein a 90% particle diameter ($D_{90}$) in a volume-based cumulative particle size distribution is from 20 $\mu$m to 50 $\mu$m.
[3] The negative electrode material according to [1] or [2] above, wherein the silicon element content is 15 to 40 mass%.
[4] A negative electrode paste, which includes the negative electrode material according to any one of [1] to [3] above.
[5] A negative electrode sheet, which includes the negative electrode material according to any one of [1] to [3] above.
[6] A lithium ion battery, which includes the negative electrode sheet according to [5] above.

Advantageous Effects of Invention

According to the negative electrode material of the present invention, it is possible to suppress the activity of the silicon particles existing on the surface of the negative electrode active material and to prevent a fine powder having a high specific surface area from being mixed into, and to thereby improve the characteristics (initial coulombic efficiency and cycle characteristics) of the lithium ion battery.

Brief Description of Drawings

Fig. 1 is an example of scanning transmission electron microscope (STEM) photographs (x 50k) of silicon nanoparticle-containing particles.
Fig. 2 is an example of the results of energy dispersive x-ray spectroscopy (EDS) of the white-dotted parts in the silicon nanoparticles of Fig. 1.
Fig. 3 is an example of the results of x-ray diffractometry (XRD) of the silicon nanoparticle-containing particles.
Fig. 4 is an example of the results of x-ray diffractometry (XRD) of the negative electrode material.
Fig. 5 is an example of the particle size distributions of the negative electrode material.
Fig. 6 is an example of the scanning electron microscope photographs (A) and the results of the area analysis by energy dispersive x-ray spectroscopy (EDS) (B).
Fig. 7 is an example of scanning electron microscope (SEM) photographs (x 2000) of the cross-section of the negative electrode material.

Mode for Carrying Out Invention

The negative electrode material in an embodiment of the present invention comprises composite particles, in which amorphous carbon comprising nanometer-size silicon particles (silicon nanoparticles) is attached to the surface of graphite particles. It is not imperative that a so-called core-shell structure is adopted, in which the whole surface of the graphite particles is coated by the amorphous carbon comprising silicon nanoparticles. In the case of coating the whole surface of the graphite particles with the amorphous carbon comprising silicon nanoparticles, electron conductivity of the negative electrode is reduced and the resistance of the whole electrode tends to increase.
In the silicon nanoparticles, primary particles preferably have a 90% particle diameter in a number-based cumulative particle size distribution of 200 nm or less. The particle diameters of the primary particles may be measured through observation with a microscope, such as a SEM or a TEM.
The silicon nanoparticles each preferably have a particle surface layer containing $SiO_x$ ($0<x\leq2$). A portion (core) other than the surface layer may be formed of elemental silicon, or may be formed of $SiO_x$ ($0<x\leq2$). The average thickness of the surface layer containing $SiO_x$ is preferably from 0.5 nm to 10 nm. When the average thickness of the surface layer containing $SiO_x$ is more than 0.5 nm, oxidation due to air or an oxidizing gas can be suppressed. In addition, when the average thickness of the surface layer containing $SiO_x$ is less than 10 nm, an increase in irreversible capacity in an initial cycle can be reduced. The average thickness may be measured through use of a TEM image.

In the negative electrode material in an embodiment of the present invention, the ratio (A/B) of the peak area (A) in the vicinity of 99 eV derived from Si to the peak area (B) in the vicinity of 103 eV derived from a silicon oxide observed by XPS measurement is preferably 0.01 to 0.10, more preferably 0.05 or more and 0.09 or less. It is considered that the value of the peak area ratio (A/B) indicates an oxidation degree of the silicon nanoparticles on the surface of the negative electrode material. When the value of the peak area ratio (A/B) is low, it is considered that silicon is oxidized and the $SiO_x$ (0<x≤2) layer on the surface of the silicon nanoparticles is thick. When an oxide film is formed on the silicon nanoparticles on the surface of the negative electrode material which are in direct contact with an electrolyte, a decomposition reaction of the electrolyte can be suppressed and the coulombic efficiency can be improved.

The silicon nanoparticles may each include, other than silicon, an element M selected from other metal elements and metalloid elements (carbon element, boron element, and the like) in each particle. Specific examples of the element M include nickel, copper, iron, tin, aluminum, and cobalt. The content amount of the element M is not particularly limited as long as the action of silicon is not greatly inhibited, and is for example, 1 mole or less with respect to 1 mole of a silicon atom.

A production method for the silicon nanoparticles is not particularly limited. The silicon nanoparticles may be produced by, for example, a method disclosed in WO 2012/000858 A1.

The negative electrode material in an embodiment of the present invention has a 10% particle diameter ($D_{10}$) in a volume-based cumulative particle size distribution of the negative electrode material measured through laser diffractometry of preferably from 3.5 $\mu$m to 9 $\mu$m, more preferably from 5 $\mu$m to 8 $\mu$m. When the $D_{10}$ is more than 3.5 $\mu$m, a sufficient binding force is obtained between the negative electrode material and a current collector, resulting in low likelihood of peeling of the negative electrode material at the time of charge and discharge. When the $D_{10}$ is less than 9 $\mu$m, an electrode density can be increased at the time of production of an electrode because fine powder is appropriately contained in the electrode.

The negative electrode material in an embodiment of the present invention has a 50% particle diameter ($D_{50}$) in the volume-based cumulative particle size distribution of the negative electrode material measured through laser diffractometry of preferably from 8 $\mu$m to 25 $\mu$m, more preferably from 12 $\mu$m to 20 $\mu$m. When the $D_{50}$ is more than 8 $\mu$m, a bulk density of the negative electrode material is not to be reduced, and hence the electrode density can be easily increased. When the $D_{50}$ is less than 25 $\mu$m, the electrode density can be easily increased at the time of production of the electrode.

The negative electrode material in an embodiment of the present invention has a 90% particle diameter ($D_{90}$) in the volume-based cumulative particle size distribution of the negative electrode material measured through laser diffractometry of preferably from 20 $\mu$m to 50 $\mu$m, more preferably from 30 $\mu$m to 45 $\mu$m.

When the $D_{90}$ is more than 20 $\mu$m, classification efficiency and productivity tend to be improved. When the $D_{90}$ is less than 50 $\mu$m, intercalation and deintercalation of lithium into a coarse active material will not cause excessively large local expansion and shrinkage, and a fracture of an electrode structure.

The negative electrode material in an embodiment of the present invention has a BET specific surface area of from 1 $m^2$/g to 5 $m^2$/g, preferably from 1.5 $m^2$/g to 4 $m^2$/g, still more preferably from 2 $m^2$/g to 3.5 $m^2$/g.

The negative electrode material in an embodiment of the present invention has a content of the silicon element of preferably 15 mass% to 40 mass%, more preferably 17 mass% to 30 mass%. When the content of the silicon element in the negative electrode material is less than 15 mass%, it becomes difficult to obtain a discharge capacity of 600 mAh/g or more. When the content of the silicon element in the negative electrode material is set to more than 40 mass%, it increases the ratio of the amorphous carbon derived from the carbon precursor comprising silicon nanoparticles and the reactivity with the electrolyte tends to increase.

The amorphous carbon may be produced from a carbon precursor. The carbon precursor is, for example, a material which can contain the silicon nanoparticles, binds to the graphite particles through heat treatment, and is converted into carbon at a high temperature of 900°C or more. Preferred examples of the carbon precursor include, but are not particularly limited to: a thermosetting resin; a thermoplastic resin; a petroleum-derived substance, such as a thermal heavy oil, a thermally cracked oil, straight asphalt, blown asphalt, or tar or petroleum pitch generated at the time of production of ethylene as a by-product; and a coal-derived substance, such as coal tar generated at the time of carbonization of coal, a heavy component obtained by distilling and removing a low-boiling-point component of coal tar, or coal tar pitch (coal pitch). Of those, the petroleum pitch or the coal pitch is particularly preferred. Pitch is a mixture of a plurality of polycyclic aromatic compounds. The use of the pitch enables production of a carbonaceous material having a high carbon yield and containing impurities in small amounts. The pitch has a low oxygen content, and hence the silicon nanoparticles are less liable to be oxidized when the silicon nanoparticles are dispersed in the carbon precursor.

The pitch has a softening point of preferably from 80°C to 300°C. When the softening point is 80°C or more, the polycyclic aromatic compounds constituting the pitch have a high average molecular weight, and the amount of a volatile component is small, and hence the carbon yield tends to be increased. The case in which the softening point is 80°C or more is preferred also because a carbonaceous material having less fine pores and having a relatively small specific surface area tends to be obtained. The case in which the softening point of the pitch is 300°C or less is preferred because the pitch is reduced in viscosity at the time of melting, and is easily uniformly mixed with the silicon nanoparticles. The softening point of the pitch may be measured in conformity with a Mettler method described in ASTM-D3104-77.

The pitch serving as the carbon precursor has a carbon yield of preferably from 20 mass% to 80 mass%, more preferably from 25 mass% to 75 mass%. When the pitch having a carbon yield of 20 mass% or more is used, a carbonaceous material having a small specific surface area tends to be obtained. Meanwhile, when the pitch has a carbon yield of 80 mass% or less, the pitch is reduced in viscosity at the time of melting, and hence the silicon nanoparticles are easily uniformly dispersed therein.

The carbon yield is determined by the following method. Pitch in a solid state is pulverized with a mortar or the like, and a pulverized product is subjected to thermogravimetric analysis while a nitrogen gas is allowed to flow. In this description, the carbon yield is defined as a ratio of a mass at 1,100°C to a loading mass. The carbon yield corresponds to a fixed carbon amount measured at a carbonization temperature of 1,100°C in JIS K2425.

The pitch has a quinoline insoluble (QI) content of preferably 10 mass% or less, more preferably from 5 mass% or less, still more preferably 2 mass% or less. The QI content of the pitch is a value corresponding to the amount of free carbon. When pitch containing free carbon in a large amount is subjected to heat treatment, in the course of generation of mesophase spheres, the free carbon adheres to surfaces of the spheres to form a three-dimensional network and prevent growth of the spheres, and hence a mosaic structure is liable to be obtained. Meanwhile, when pitch containing free carbon in a small amount is subjected to the heat treatment, the mesophase spheres easily grow large to generate needle coke. When the QI content falls within the above-mentioned range, electrode characteristics become more satisfactory.

The pitch has a toluene insoluble (TI) content of preferably from 10 mass% to 70 mass%. When the TI content is 10 mass% or more, the polycyclic aromatic compounds constituting the pitch have a high average molecular weight, and the amount of the volatile component is small, and hence the carbon yield is increased. In addition, a carbonaceous material having less fine pores and having a small specific surface area tends to be obtained. When the TI content is 70 mass% or less, the polycyclic aromatic compounds constituting the pitch have a low average molecular weight, and hence the carbon yield is reduced. However, the pitch is reduced in viscosity, and hence is easily uniformly mixed with the silicon nanoparticles. When the TI content falls within the above-mentioned range, the pitch and other components can be uniformly mixed, and a composite material exhibiting suitable characteristics as an active material for a battery can be obtained.

The QI content and TI content of the pitch may be measured in conformity with JIS K2425.

As a method of dispersing silicon nanoparticles in the carbon precursor, a preferred method is uniformly mixing the silicon nanoparticles in the carbon precursor with a twin screw extruder. During kneading of the carbon precursor and the silicon nanoparticles, it is preferred to set a heating temperature to a temperature equal to or higher than the softening point of the carbon precursor, and to allow a nitrogen gas to flow in a system in order to prevent oxidation of the silicon nanoparticles and the carbon precursor.

As a loading method for raw materials, there are given: a method involving loading, from a hopper, the silicon nanoparticles and the carbon precursor having been subjected to dry blending; and a method involving loading the carbon precursor from a hopper and loading the silicon nanoparticles from a side.

The carbon precursor in which the silicon nanoparticles are uniformly mixed with a twin screw extruder is preferably finely pulverized so as to have a 50% particle diameter ($D_{50}$) in a volume-based cumulative particle size distribution of from 3 $\mu$m to 20 $\mu$m.

In order to adjust the $D_{50}$ of the silicon nanoparticle-containing particles to less than 3 $\mu$m, it is necessary to significantly reduce a raw material supply amount at the time of the fine pulverization, and productivity tends to be reduced. In addition, when the silicon nanoparticle-containing particles have a $D_{50}$ of more than 20 $\mu$m, the composite particles are excessively increased in sizes in the case where the silicon nanoparticle-containing particles are mixed with a conductive filler and subjected to heat treatment. Also, the number of silicon nanoparticle-containing particles per unit mass of the composite particles is reduced, and the silicon nanoparticle-containing particles tend to form a composite with only part of the conductive filler.

In the silicon nanoparticle-containing particles including the silicon nanoparticles and the carbon precursor, the content of the silicon nanoparticles is preferably from 30 mass% to 50 mass%. When the content of the silicon nanoparticles is less than 30 mass%, the ratio of the carbon precursor becomes high, and the carbon precursors excessively bind to each other at the time of the heat treatment. As a result, it is necessary to increase pulverization strength in order to obtain the negative electrode material as fine particles, and the particles tend to be excessively damaged. When the content of the silicon nanoparticles is more than 50 mass%, it becomes difficult to uniformly disperse the silicon nanoparticles in the carbon precursor, and to cover the silicon nanoparticles with the carbon precursor. In addition, it becomes difficult for the silicon nanoparticle-containing particles to form a composite with the conductive filler through the heat treatment.

By mixing the silicon nanoparticle-containing particles dispersed in a carbon precursor with a conductive filler in advance and subjecting the mixture to heat treatment, it is possible to inhibit the carbon precursors from being melt and binding to each other, to homogenize the gas generated from the carbon precursor, and to suppress reactivity of the silicon particles that exist on the surface of the negative electrode material. In addition, by preventing a fine powder having a high specific surface area from being mixed into, a negative electrode material having a high discharge capacity, a high coulombic efficiency and high cycle characteristics can be obtained.

A conductive filler is not particularly limited, and examples thereof include graphite particles, carbon black, carbon nanotubes, carbon nanofiber and graphene. It is preferable that the conductive filler contains graphite particles. Graphite particles may be used singly, graphite particles having a different particle diameter may be used in combination, or two or more kinds of conductive fillers including graphite particles may be used in combination.

The graphite particles have an average spacing between (002) planes, $d_{002}$, calculated through analysis of an X-ray diffraction pattern with a Cu-K$\alpha$ radiation of preferably 0.337 nm or less. As the $d_{002}$ becomes smaller, the amount of a lithium ion to be intercalated and deintercalated per unit mass is increased. Therefore, the graphite particles having a smaller $d_{002}$ contributes more to an increase in mass energy density. When the $d_{002}$ is 0.337 nm or less, a large part of an optical structure observed with a polarizing microscope becomes an optically anisotropic structure.

The graphite particles have a thickness of a crystallite in a C-axis direction, $L_C$, calculated through the analysis of an X-ray diffraction pattern with a Cu-K$\alpha$ radiation of preferably from 50 nm to 1,000 nm. A large $L_C$ is advantageous for increasing the energy density per volume of a battery. From the viewpoint of increasing the energy density per volume, the $L_C$ is more preferably from 80 nm to 300 nm, still more preferably from 100 nm to 200 nm. A small $L_C$ is advantageous for maintaining the cycle characteristics of the battery. From the viewpoint of maintaining the cycle characteristics of the battery, the $L_C$ is more preferably from 50 nm to 200 nm, still more preferably from 50 nm to 100 nm.

The $d_{002}$ and the $L_C$ may be measured through powder X-ray diffractometry (XRD) (see Tokichi Noda, Michio Inagaki, Japan Society for The Promotion of Science, Material of The 117th Committee, 117-71-A-1 (1963); Michio Inagaki et al., Japan Society for The Promotion of Science, Material of The 117th Committee, 117-121-C-5 (1972); and Michio Inagaki, "Carbon", 1963, No. 36, pp. 25-34).

The graphite particles have a 50% particle diameter ($D_{50}$) in a volume-based cumulative particle size distribution of preferably from 1 $\mu$m to 15 $\mu$m, more preferably from 4 $\mu$m to 12 $\mu$m, still more preferably from 6 $\mu$m to 10 $\mu$m. When the $D_{50}$ is less than 1 $\mu$m, a side reaction is liable to occur at the time of charge and discharge. Meanwhile, when the $D_{50}$ is more than 15 $\mu$m, it slows the lithium ion diffusion in the negative electrode material, and a charge and discharge rate tends to be decreased.

The $D_{50}$ may be measured with a laser diffraction particle size distribution analyzer, such as Mastersizer (trademark) manufactured by Malvern.

The graphite particles have a BET specific surface area of preferably from 1.5 m$^2$/g to 20 m$^2$/g, more preferably from 2 m$^2$/g to 12 m$^2$/g. When the BET specific surface area falls within the above-mentioned range, a large contact area with an electrolytic solution can be ensured without using a binder in an excessive amount. Thus, a lithium ion is smoothly intercalated and deintercalated, and a reaction resistance of the battery can be reduced. The BET specific surface area is calculated based on a nitrogen gas adsorption amount. As a measurement device, there is given, for example, NOVA-1200 manufactured by Yuasa Ionics.

A production method for the graphite particles is not particularly limited. The graphite particles may be produced by, for example, a method disclosed in WO 2014/003135 A1.

As carbon black, acetylene black, channel black, furnace black, Ketjen black, lamp black, and thermal black may be used. The carbon black has a specific surface area of preferably from 10 m$^2$/g to 1600 m$^2$/g, more preferably from 20 m$^2$/g to 100 m$^2$/g.

Carbon nanotubes preferably have a tubular structure in which graphene sheets are rolled in a cylindrical shape. The carbon nanotubes have a fiber diameter of preferably 2 nm to 50 nm, an aspect ratio of preferably 100 or more, and a BET specific surface area of 40 m$^2$/g to 1000 m$^2$/g.

Preferred carbon nanofiber is the one that is obtained by graphitization treatment at 2600°C or more in an inert atmosphere and has a tubular structure.

The carbon nanofibers have a fiber diameter of preferably 80 nm to 200 nm, an aspect ratio of preferably 50 to 100, and a BET specific surface area of 10 m$^2$/g to 25 m$^2$/g.

In the case of using carbon nanotubes and carbon nanofibers as a conductive filler, it is preferable to use the one obtained by removing a catalyst used in the synthesis thereof (for example, iron, nickel and cobalt).

At the time of blending silicon nanoparticle-containing particles and a conductive filler, the mixture preferably contains 40 mass% to 60 mass% of silicon nanoparticle-containing particles and 40 mass% to 60 mass% of the conductive filler, and has an index determined by $\Sigma$ (BET specific surface area x mass% of the conductive filler)/(mass% of silicon nanoparticle-containing particles) of 6 m$^2$/g to 13 m$^2$/g.

When the index determined by $\Sigma$ (BET specific surface area x mass% of the conductive filler)/(mass% of silicon nanoparticle-containing particles) is less than 6 m$^2$/g, the carbon precursors excessively bind to each other at the time of the heat treatment, and the outgassing of a tar-containing gas generated from the carbon precursor tends to be uneven. It is considered that oxidation of the surface of silicon nanoparticles proceeds while the tar-containing gas generated by the heat treatment is released out of the system through the particles. When the outgassing of a tar-containing gas is uneven, it results in uneven oxidation of the surface of the silicon nanoparticles. In addition, it is necessary to increase pulverization strength in order to obtain the negative electrode material as fine particles from solid aggregates, and the particles tend to be excessively damaged. On the other hand, when the index determined by $\Sigma$ (BET specific surface area x mass% of the conductive filler)/(mass% of silicon nanoparticle-containing particles) is more than 13 $m^2$/g and the conductive filler exists in an excessive amount around the silicon nanoparticle-containing particles, the fluidity of the carbon precursor constituting the silicon nanoparticle-containing particles is reduced at the time of heat treatment. As a result, the silicon nanoparticle-containing particles tend to form a composite with only the conductive filler in the vicinity of the silicon nanoparticle-containing particles, and the conductive filler which was not integrated as a composite remains in a large amount.

As a mechanism for mixing the silicon nanoparticle-containing particles and the graphite particles, general convective mixing, diffusive mixing, or shear mixing may be utilized.

As a mixing device, there are given, for example, a stirring and mixing device in which a stirring blade rotates in a container, a fluid mixing device in which a raw material is fluidized with a gas flow, and a mixing device in which a container itself rotates and which utilizes a gravity, such as a V-type mixer.

Of those, a stirring and mixing device is preferred as a mixing device for the silicon nanoparticle-containing particles and a conductive filler, and for example, a Henschel mixer (manufactured by Nippon Coke & Engineering. Co., Ltd.), a Nauta mixer (manufactured by Hosokawa Micron Corporation), Vitomix (manufactured by Hosokawa Micron Corporation), and Cyclomix (manufactured by Hosokawa Micron Corporation) may be used.

However, when a device utilizing mechanochemical treatment in which a compression force and a shear force are applied at the same time, such as a ball mill, is used, the silicon nanoparticles react with carbon or form an intermediate product even at low temperature, and silicon carbide is liable to be generated through heat treatment.

A mixture of the silicon nanoparticle-containing particles and the conductive filler is subjected to heat treatment at a temperature of preferably from 900°C to 1,200°C, more preferably from 1,000°C to 1,100°C. Through the heat treatment, the carbon precursor constituting the silicon nanoparticle-containing particles melts, binds to the conductive filler, and is carbonized, and thus can form a composite with the conductive filler. When the temperature of the heat treatment is less than 900°C, carbonization of the carbon precursor is not sufficiently completed, and hydrogen and oxygen remain in the negative electrode material and adversely affect the battery characteristics in some cases. Meanwhile, when the temperature of the heat treatment is more than 1,200°C, the silicon nanoparticles are converted into silicon carbide, and charge characteristics are reduced.

In addition, the heat treatment is preferably performed in an inert atmosphere. An example of the inert atmosphere is an atmosphere in which an inert gas, such as an argon gas or a nitrogen gas, is allowed to flow in a heat treatment system.

By heat treatment, the carbon precursor melts and binds to the conductive filler in an aggregate form in some cases, and therefore it is desirable to pulverize the carbon precursor. As a suitable pulverizing method, examples include a pulverizer by means of impact such as a hammer, and a pin mill and a turbo mill by means of impact and shear.

As a method for classifying the pulverized product, classification by screening and air classification are available. For screening, preferred is a dry-method classification using a vibrating sieve having an opening of 20 $\mu$m to 53 $\mu$m. For air classification, Elbow-jet air classifier (manufactured by Nittetsu Mining Co., Ltd.) by means of an inertia force, Turboclassifier (produced by Nisshin Engineering Inc.), and Turboplex (produced by Hosokawa Micron Corporation) can be employed.

As a cut-off point, it is preferable to perform classification so that the negative electrode material has a 90% particle diameter ($D_{90}$) in a volume-based cumulative particle size distribution of from 20 $\mu$m to 50 $\mu$m. When the $D_{90}$ is less than 20 $\mu$m, classification efficiency and productivity tend to be reduced significantly. When the $D_{90}$ is more than 50 $\mu$m, intercalation and deintercalation of lithium into a coarse active material are accompanied by large local expansion and shrinkage, which provides a fracture origin of an electrode structure.

From the negative electrode material, a magnetic component mixed into powder may by removed by using a Nb or ferrite magnet of 5,000 gauss to 12,000 gauss and the like.

A paste for a negative electrode in an embodiment of the present invention includes the negative electrode material, a binder, a solvent, and as required, a conductive additive and the like. The paste for a negative electrode is obtained, for example, by kneading the negative electrode material, the binder, the solvent, and as required, the conductive additive and the like. The paste for a negative electrode may be formed into a shape, such as a sheet or a pellet.

Examples of the binder include polyethylene, polypropylene, an ethylene-propylene terpolymer, a butadiene rubber, a styrene-butadiene rubber, a butyl rubber, an acrylic rubber, and a polymer compound having a large ion conductivity. Examples of the polymer compound having a large ion conductivity include polyvinylidene fluoride, polyethylene oxide, polyepichlorhydrin, polyphosphazene, and polyacrylonitrile. The amount of the binder is preferably from 0.5 part by mass to 100 parts by mass with respect to 100 parts by mass of the negative electrode material.

The conductive additive is not particularly limited as long as the conductive additive plays a role in imparting conductivity and electrode stability (buffering action against a change in volume caused by intercalation and deintercalation of a lithium ion) to an electrode. Examples thereof include a carbon nanotube, a carbon nanofiber, a vapor grown carbon fiber (e.g., "VGCF (trademark)" manufactured by Showa Denko K.K.), conductive carbon black (e.g., "DENKA BLACK (trademark)" manufactured by Denki Kagaku Kogyo Kabushiki Kaisha, "Super C65" manufactured by Imerys Graphite & Carbon, and "Super C45" manufactured by Imerys Graphite & Carbon), and conductive graphite (e.g., "KS6L" manufactured by Imerys Graphite & Carbon and "SFG6L" manufactured by Imerys Graphite & Carbon). In addition, those conductive additives may be used in combination thereof. The amount of the conductive additive is preferably from 5 parts by mass to 100 parts by mass with respect to 100 parts by mass of the negative electrode material.

The solvent is not particularly limited, and examples thereof include N-methyl-2-pyrrolidone, dimethylformamide, isopropanol, and water. A binder in which water is used as the solvent preferably includes a thickener. The amount of the solvent is adjusted so as to give a viscosity which allows easy application of the paste onto a current collector.

A negative electrode sheet in an embodiment of the present invention includes a current collector, and an electrode layer which covers the current collector. Examples of the current collector include a nickel foil, a copper foil, a nickel mesh, and a copper mesh. The electrode layer contains a binder and the negative electrode material. The electrode layer may be obtained, for example, by applying the paste onto the current collector, followed by drying. An application method for the paste is not particularly limited. The thickness of the electrode layer is generally from 50 $\mu$m to 200 $\mu$m. When the thickness of the electrode layer becomes too large, the negative electrode sheet cannot be housed in a standard battery case in some cases. The thickness of the electrode layer may be adjusted by the application amount of the paste. In addition, the thickness of the electrode layer may also be adjusted by performing press forming after drying the paste. As a press forming method, there are given, for example, a roll press forming method and a plate press forming method. A pressure in the press forming is preferably from 1 ton/cm$^2$ to 5 ton/cm$^2$. The electrode density of the negative electrode sheet may be calculated as described below. Specifically, the negative electrode sheet having been pressed is punched into a circular shape having a diameter of 16 mm, and the mass and thickness of the resultant negative electrode sheet are measured. The mass and thickness of the electrode layer are determined by subtracting the mass and thickness of the current collector separately measured from the measured mass and thickness of the negative electrode sheet, and the electrode density is calculated based on these values.

A lithium ion secondary battery according to the present invention includes: at least one selected from the group consisting of a non-aqueous electrolytic solution and a non-aqueous polymer electrolyte; a positive electrode sheet; and the negative electrode sheet.

A positive electrode sheet which has hitherto been used in the lithium ion secondary battery, specifically a sheet including a positive electrode active material may be used as the positive electrode sheet. The positive electrode active material to be used for a positive electrode of the lithium ion secondary battery is generally a lithium-containing transition metal oxide, preferably an oxide which mainly contains at least one kind of transition metal element selected from Ti, V, Cr, Mn, Fe, Co, Ni, Mo, and W, and lithium, and which is a compound having a molar ratio of lithium to the transition metal element (lithium/transition metal element) of from 0.3 to 2.2, more preferably an oxide which contains at least one kind of transition metal element selected from V, Cr, Mn, Fe, Co, and Ni, and lithium, and which is a compound having a molar ratio of lithium to the transition metal element of from 0.3 to 2.2. For example, Al, Ga, In, Ge, Sn, Pb, Sb, Bi, Si, P, or B may be incorporated therein in a range of less than 30 mol% with respect to the transition metal element. Out of the above-mentioned positive electrode active materials, it is preferred to use at least one kind of material having a spinel structure represented by the general formula Li$_y$MO$_2$ (M represents at least one kind of Co, Ni, Fe, and Mn, y=0 to 1.2) or Li$_z$N$_2$O$_4$ (N includes at least Mn, z=0 to 2).

The non-aqueous electrolytic solution and the non-aqueous polymer electrolyte to be used in the lithium ion battery are not particularly limited. Examples thereof include: an organic electrolytic solution obtained by dissolving a lithium salt, such as LiClO$_4$, LiPF$_6$, LiAsF$_6$, LiBF$_4$, LiSO$_3$CF$_3$, CH$_3$SO$_3$Li, or CF$_3$SO$_3$Li, into a non-aqueous solvent, such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, or $\gamma$-butyrolactone; a gel-like polymer electrolyte containing, for example, polyethylene oxide, polyacrylonitrile, polyvinylidene fluoride, and polymethyl methacrylate; and a solid polymer electrolyte containing, for example, a polymer having an ethylene oxide bond.

In addition, a substance which causes a decomposition reaction at the time of initial charge of the lithium ion battery may be added in a small amount to the electrolytic solution. Examples of such substance include vinylene carbonate (VC), biphenyl, propanesultone (PS), fluoroethylene carbonate (FEC), and ethylenesultone (ES). The addition amount is preferably from 0.01 mass% to 50 mass%.

The lithium ion battery may include a separator between the positive electrode sheet and the negative electrode sheet. Examples of the separator include non-woven fabric, cloth, and a microporous film each including, as a main component, a polyolefin, such as polyethylene or polypropylene, and a combination thereof.

The lithium ion battery may be used, for example: as a power source of an electronic device, such as a smart phone, a tablet PC, or a personal digital assistance; as a power source of an electric device, such as a power tool, a vacuum cleaner, an electric bicycle, a drone, or an electric vehicle; or for storage of power obtained through a fuel cell, solar power generation, wind power generation, or the like.

Examples

The present invention is specifically described below by way of Examples and Comparative Examples, but the present invention is not limited to the following Examples. In Examples and Comparative Examples, an average spacing between (002) planes ($d_{002}$) and a thickness of a crystallite in a C-axis direction ($L_C$) based on X-ray diffractometry, particle diameters ($D_{10}$, $D_{50}$, and $D_{90}$), and a specific surface area based on a BET method are measured by the methods described in detail in the "Description of Embodiments" section of this description. In addition, measurement of other physical properties and battery evaluation were performed as described below.

[Si2p Area Ratio]

Measurement was performed using by an X-ray photoelectron spectrometer (Quantera II) produced by ULVAC-PHI, Inc. under the following conditions:

X-ray source: Al monochromator 100 $\mu$m, 25 W, 15 kV
Analyzed area: 100 $\mu$m
Photoelectron ejection angle: 45°

The binding energy scale was corrected by setting the peak derived from the C-C component in C1s spectrum to a binding energy of 284.6 eV. The measured spectrum was separated to calculate the ratio (A/B) of the peak area (A) in the vicinity of 99 eV to the peak area (B) in the vicinity of 103 eV.

[Silicon Element in Negative Electrode Material]

10 g of a sample was weighed and loaded into a platinum crucible. 1 g of sodium carbonate (produced by Kanto Chemical Co., Inc.; reagent grade) was added thereto and a platinum lid was put on the crucible. The platinum crucible was roasted over a gas burner to melt the sample, and the platinum crucible including the platinum lid was placed in a 200 ml-volume Teflon beaker. 20 ml of ultrapure water was delivered by drops into the Teflon beaker. A Teflon watch glass was put over the beaker, and the beaker was heated on a hot plate of 60°C to 70°C. After dissolving the melted product in the platinum crucible in water, the platinum crucible and the platinum lid were taken out of the Teflon beaker, and 5 ml of nitric acid obtained by diluting concentrated nitric acid with an equivalent amount of water (concentrated nitric acid 1 : water 1) was delivered by drops into the crucible. After leaving the crucible to stand to be cooled to room temperature, the solution was collected in a 250 ml-volume measuring flask, followed by filling the measuring flask with ultrapure water to the marked line.
By using a standard solution of 1000 ppm (produced by Kanto Chemical Co., Inc.; reagent grade), the silicon element was quantified with an ICP emission spectrometer (Vista-PRO, produced by SII NanoTechnology Inc.).

[Production of Positive Electrode Sheet]

90 g of $LiCoO_2$, 5 g of carbon black (SUPER C 45 manufactured by Imerys Graphite & Carbon) serving as a conductive additive, and 5 g of polyvinylidene difluoride (PVdF) serving as a binder were stirred and mixed while N-methyl-pyrrolidone was appropriately added thereto. Thus, a paste for a positive electrode in a slurry form was obtained.
The paste for a positive electrode was applied onto an aluminum foil having a thickness of 20 $\mu$m with a roll coater, followed by drying. Thus, a sheet for a positive electrode was obtained. An electrode after the drying was subjected to roll pressing so as to have a density of 3.6 g/cm$^3$. Thus, a positive electrode sheet for battery evaluation was obtained.

[Production of Negative Electrode Sheet]

A styrene butadiene rubber (SBR) and carboxymethyl cellulose (CMC) were used as binders. Specifically, an aqueous solution having dispersed therein the SBR at a solid content of 40% and an aqueous solution having dissolved therein CMC powder as a solid content were obtained.
Carbon black (SUPER C 45 manufactured by Imerys Graphite & Carbon) and vapor grown carbon fibers (VGCF (trademark)-H manufactured by Showa Denko K.K.) were prepared as conductive additives, and a mixed conductive additive obtained by mixing these conductive additives at a mass ratio of 3:2 was used.
90 Parts by mass of a negative electrode material produced in each of Examples and Comparative Examples described below, 5 parts by mass of the mixed conductive additive, the CMC aqueous solution and the SBR aqueous solution were mixed so as to contain 2.5 parts by mass of a CMC solid content and 2.5 parts by mass of a SBR solid content; and water was added thereto in an appropriate amount for viscosity control. The resultant mixture was kneaded with a planetary centrifugal mixer (produced by Thinky Corporation) to provide a paste for a negative electrode.

The paste for a negative electrode was uniformly applied onto a copper foil having a thickness of 20 $\mu$m with a doctor blade so as to have a thickness of 150 $\mu$m, followed by drying with a hot plate, and then vacuum drying. Thus, a negative electrode sheet was obtained. An electrode after the drying was pressed with a uniaxial pressing machine at a pressure of 3 ton/cm$^2$. Thus, a negative electrode sheet for battery evaluation was obtained.

[Capacity Ratio between Positive Electrode and Negative Electrode]

When a lithium ion battery in which a positive electrode sheet and a negative electrode sheet are opposed to each other is produced, a balance between the capacities of both the sheets needs to be considered. Specifically, when the capacity of a negative electrode on a lithium ion receiving side is too small, excess Li deposits on a negative electrode side to cause reductions in cycle characteristics. Meanwhile, when the capacity of the negative electrode is too large, the cycle characteristics are improved, but the energy density of the battery is reduced owing to charge and discharge under a low load state. In order to prevent such situations, while the same positive electrode sheet was used, the negative electrode sheet was evaluated for a discharge capacity per weight of an active material in advance through use of a half cell with a Li counter electrode, and the capacity of the negative electrode sheet was finely adjusted so that the ratio of the capacity ($Q_A$) of the negative electrode sheet to the capacity ($Q_C$) of the positive electrode sheet was a constant value of 1.2.

[Production of Battery for Evaluation]

The operations as below were conducted in a glove box in which a dry argon gas atmosphere having a dew point of -80°C or less was maintained.

[Two-electrode Cell]

The negative electrode sheet and the positive electrode sheet were punched to provide a negative electrode piece and a positive electrode piece having an area of 20 cm$^2$, respectively. An Al tab and a Ni tab were attached to the Al foil of the positive electrode piece and the Cu foil of the negative electrode piece, respectively. A microporous film made of polypropylene was sandwiched between the negative electrode piece and the positive electrode piece. The resultant in this state was put into an aluminum laminate packing material in a bag form, and an electrolytic solution was poured into the packing material. After that, an opening was sealed through thermal fusion. Thus, a battery for evaluation was produced. The electrolytic solution is a solution obtained by: mixing 1 mass% of vinylene carbonate (VC) and 10 mass% of fluoroethylene carbonate (FEC) in a solvent obtained by mixing ethylene carbonate, ethyl methyl carbonate, and diethyl carbonate at a volume ratio of 3:5:2; and further dissolving therein LiPF$_6$ as an electrolyte at a concentration of 1 mol/L.

[Cell with Lithium Counter Electrode]

The negative electrode sheet and a metal lithium foil punched into 16 mm$\varphi$ were laminated on each other through intermediation of a separator (a microporous film made of polypropylene (Celgard 2400)) in a cell (inner diameter: about 18 mm) made of polypropylene with a screw-type lid, and an electrolytic solution was added thereto, to thereby provide a test cell. The electrolytic solution is a solution obtained by: mixing 1 mass% of vinylene carbonate (VC) and 10 mass% of fluoroethylene carbonate (FEC) in a solvent obtained by mixing ethylene carbonate, ethyl methyl carbonate, and diethyl carbonate at a volume ratio of 3:5:2; and further dissolving therein LiPF$_6$ as an electrolyte at a concentration of 1 mol/L.

[Measurement Test of Initial Discharge Capacity and Initial Coulombic Efficiency]

The test was performed through use of the cell with a lithium counter electrode. Constant current (CC) charge was performed at a current value of 0.1 C from a rest potential to 0.005 V. Next, at 0.005 V, the charge was switched to constant voltage (CV) charge, and the CV charge was performed at a cut-off current value of 0.005 C. Discharge was performed in a CC mode at a current value of 0.1 C by setting an upper limit voltage to 1.5 V. The charge and discharge were performed in a constant-temperature bath set to 25°C. Herein, a discharge capacity in an initial cycle was defined as an initial discharge capacity. In addition, a ratio in quantity of electricity between charge and discharge in the initial cycle, that is, a value of the ratio of a quantity of electricity discharged in the initial cycle to a quantity of electricity charged in the initial cycle expressed in percentage was defined as initial coulombic efficiency.

[Measurement Test of Charge and Discharge Cycle Characteristics]

Measurement test of charge and discharge cycle characteristics was performed through use of the two-electrode cell. Aging was performed by repeating charge and discharge 5 times at a current value of 0.2 C, and then charge and discharge cycle characteristics were measured by the following method. Charge was performed in a constant current (CC) mode at a current value of 1 C by setting an upper limit voltage to 4.2 V, and in a constant voltage (CV) mode at a cut-off current of 0.05 C. Discharge was performed in a CC mode at a current value of 1 C by setting a lower limit voltage to 2.8 V. Charge and discharge operations were repeated 100 cycles when the above-mentioned charge and discharge operations were defined as 1 cycle, and a discharge capacity retention rate after 100 cycles defined by the following equation was calculated.

$$\text{Discharge capacity retention rate after 100 cycles}$$
$$(\%)=(\text{discharge capacity in 100th cycle/discharge capacity in}$$
$$\text{initial cycle})\times 100$$

Raw materials for a negative electrode material and their preparation methods are described below.

[Silicon nanoparticle-containing Particles]

36 Parts by mass of silicon nanoparticles (50% particle diameter in a number-based cumulative particle size distribution: 90 nm, 90% particle diameter in the number-based cumulative particle size distribution: 150 nm; produced by Umicore) and 64 parts by mass of petroleum pitch (softening point: 214°C, carbon yield: 72.35 mass%, QI content: 0.12 mass%, TI content: 47.75 mass%) were put into a 10 L plastic container, and subjected to dry blending. Mixed powder of the silicon nanoparticles and the petroleum pitch having been subjected to the dry blending was loaded into a raw material hopper of a twin screw extruder TEM-18SS (manufactured by Toshiba Machine Co., Ltd.). The kneading conditions of the twin screw extruder were as follows: a temperature of 250°C; a screw revolution number of 700 rpm; and a mixed powder loading speed of 2 kg/h. During kneading, a nitrogen gas was allowed to flow at a rate of 1.5 L/min.
The product after having been kneaded with the twin screw extruder was coarsely pulverized with a hammer, and then finely pulverized with a jet mill STJ-200 (manufactured by Seishin Enterprise Co., Ltd.). The silicon nanoparticle-containing particles had a content of the silicon nanoparticles of 36 mass%. It was also found that the silicon nanoparticle-containing particles had a 50% particle diameter ($D_{50}$) in a volume-based cumulative particle size distribution of 10 $\mu$m.

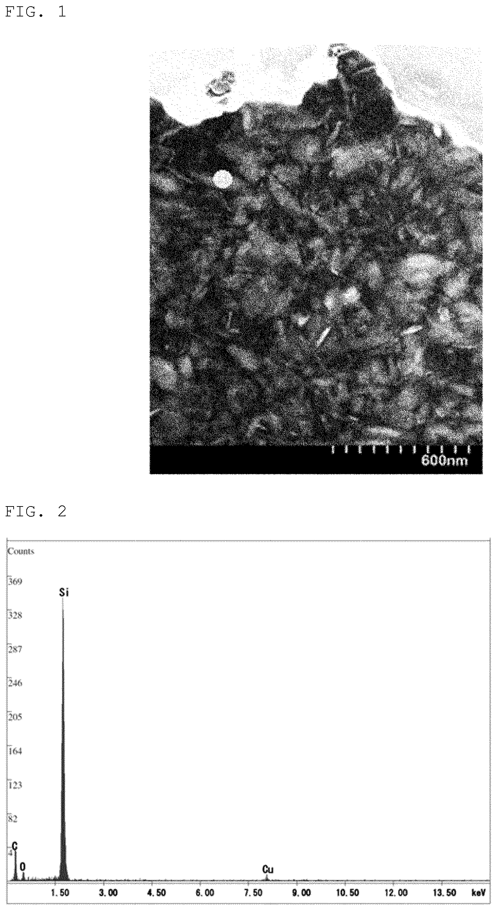

Fig. 1 is for showing a scanning transmission electron microscope (STEM) photograph (transmission electron microscope image: x 50k) of silicon nanoparticle-containing particles. It is confirmed that non-spherical silicon nanoparticles (white particles in the figure) are highly filled in the petroleum pitch as a matrix.
Fig. 2 is for showing the results of point-analysis of energy dispersive x-ray spectroscopy (EDS) of the silicon nanoparticles. The main component of the particles is silicon element and trace amounts of oxygen and carbon were detected (copper in Fig. 2 is derived from a sample holder).

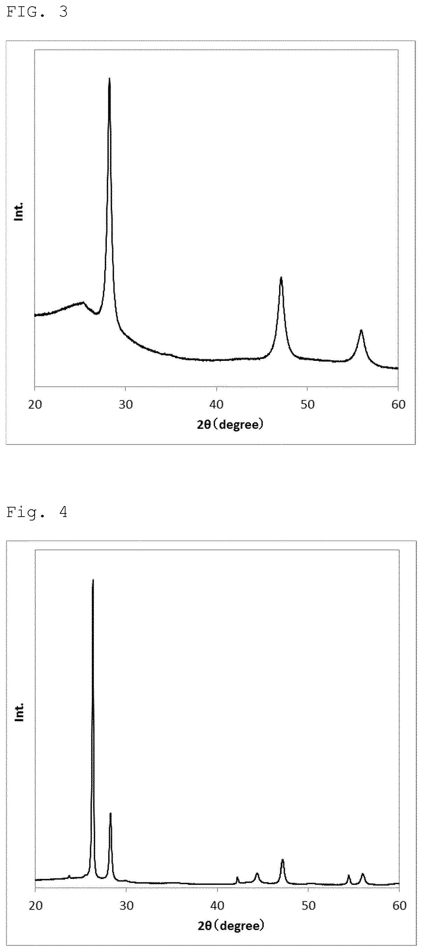

Fig. 3 is for showing an x-ray diffractometry pattern of the silicon nanoparticle-containing particles. The clear peak is derived from Si.

[Graphite Particles 1]

Petroleum-based coke was coarsely pulverized with a hammer, and then pulverized with a Bantam mill (manufactured by Hosokawa Micron Corporation, mesh: 1.5 mm).
The resultant was pulverized with a jet mill STJ-200 (manufactured by Seishin Enterprise Co., Ltd.) under the conditions of a grinding pressure of 0.6 MPa and a pusher pressure of 0.7 MPa. The pulverized product was subjected to heat treatment at 3,000°C in an Acheson furnace. Thus, graphite particles 1 were obtained.

[Graphite Particles 2]

Petroleum-based coke was coarsely pulverized with a hammer, and then pulverized with a Bantam mill (manufactured by Hosokawa Micron Corporation, mesh: 0.5 mm). The pulverized product was allowed to pass through a sieve having an opening of 32 $\mu$m, and the undersized particles were subjected to heat treatment in Acheson furnace at 3,000°C to obtain graphite particles 2. Physical properties [$d_{002}$ (nm), $L_C$ (nm), BET specific surface area ($m^2$/g), particle size (D10, D50, D90; $\mu$m)] of the graphite particles 1 and 2 are shown in Table 1.

[Table 1]

| | d002 (nm) | Lc (nm) | BET specific surface area ($m^2$/g) | Particle size | | |
|---|---|---|---|---|---|---|
| | | | | $D_{10}$ ($\mu$m) | $D_{50}$ ($\mu$m) | $D_{90}$ ($\mu$m) |
| Graphite particles 1 | 0.3357 | 200.0 | 11.0 | 1.8 | 4.4 | 8.7 |
| Graphite particles 2 | 0.3357 | 120.0 | 2.5 | 4.8 | 12.0 | 25.6 |

Example 1

4.8 kg of the silicon nanoparticle-containing particles and 5.2 kg of the graphite particles 1 were weighed, loaded into Cyclomix CLX-50 (manufactured by Hosokawa Micron Corporation), and mixed at a circumferential speed of 24 m/sec for 10 minutes.

The index determined by $\Sigma$ (BET specific surface area x mass% of the conductive filler)/(mass% of silicon nanoparticle-containing particles) in the mixed powder is 11.9 $m^2$/g.

80 g of the resultant mixed powder was packed into a saggar made of alumina (90 mm x 90 mm x 50 mm), placed at the center of a tubular furnace (inside diameter: 130 mm, soaking area: 500 mm), and was increased in temperature at a rate of 150°C/h up to 1,050°C, kept at 1,050°C for 1 hour, and then reduced in temperature at a rate of 150°C/h to room temperature while a nitrogen gas was allowed to flow. The heat-treated product was recovered from the saggar made of alumina, and then pulverized with a Bantam mill (manufactured by Hosokawa Micron Corporation, mesh: 0.5 mm). Coarse powder was removed therefrom with a stainless-steel sieve having an opening of 45 $\mu$m.

The cell with a lithium counter electrode and the two-electrode cell each using the above-described negative electrode material were evaluated.

Fig. 4 is for showing an x-ray diffractometry pattern of the negative electrode material. The clear peak are derived from graphite and Si.

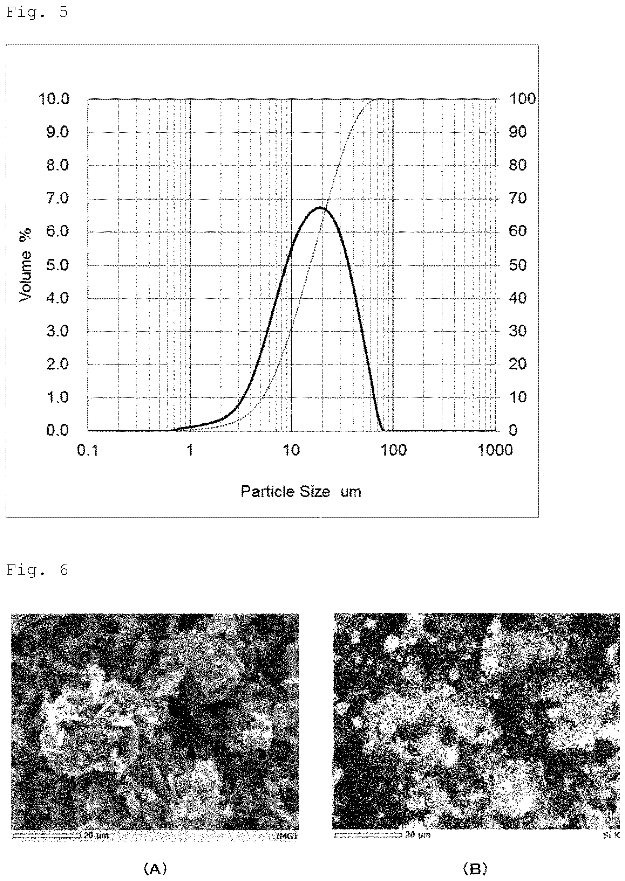

Fig. 5 is for showing a particle size distributions of the negative electrode material.

Fig. 6 is for showing a scanning transmission electron microscope photographs and the results of the area analysis by energy dispersive x-ray spectroscopy (EDS) of negative electrode material. It is confirmed that a phase containing silicon nanoparticle is scattered over graphite particles with a concentration distribution.

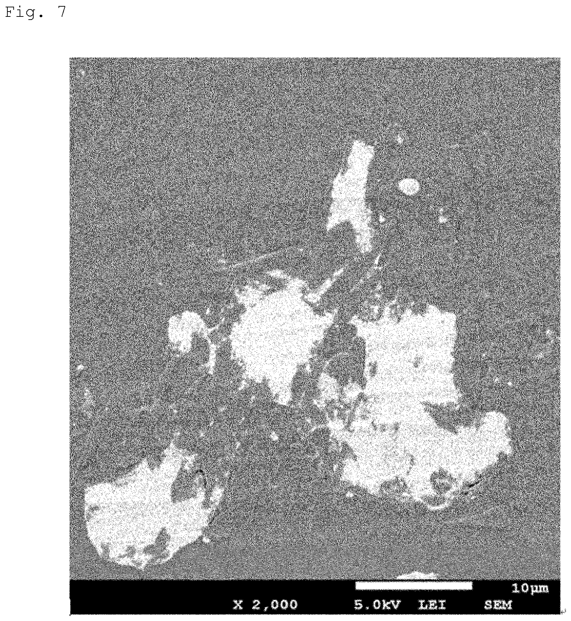

Fig. 7 is for showing a photograph, taken by observing the cross-section of the negative electrode material embedded in resin by a scanning electron microscope. White parts indicate a carbonaceous phase containing silicon nanoparticles (a carbon precursor carbonized by heat treatment). The outlined gray part indicates graphite particles. The state in which graphite particles and the carbonaceous phase containing silicon nanoparticles are attached to each other can be seen.

An undersize yield, a silicon element content in the negative electrode material, a BET specific surface area, a particle size, results of XPS, and the evaluation results of a battery are shown in Table 2.

Example 2

4.8 kg of the silicon nanoparticle-containing particles, 3.0 kg of the graphite particles 1 and 2.2 kg of the graphite particles 2 were weighed, loaded into Cyclomix CLX-50 (manufactured by Hosokawa Micron Corporation), and mixed at a circumferential speed of 24 m/sec for 10 minutes. The index determined by $\Sigma$ (BET specific surface area x mass% of the conductive filler)/(mass% of silicon nanoparticle-containing particles) in the mixed powder is 8.0 $m^2$/g.

Heat treatment, pulverization, screening and battery evaluation were performed in the same way as in Example 1.

An undersize yield, a silicon element content in the negative electrode material, a BET specific surface area, a particle size, results of XPS, and the evaluation results of a battery are shown in Table 2.

Comparative Example 1

4.8 kg of the silicon nanoparticle-containing particles and 5.2 kg of the graphite particles 2 were weighed, loaded into Cyclomix CLX-50 (manufactured by Hosokawa Micron Corporation), and mixed at a circumferential speed of 24 m/sec for 10 minutes. The index determined by $\Sigma$ (BET specific surface area x mass% of the conductive filler)/(mass% of silicon nanoparticle-containing particles) in the mixed powder is 2.7 $m^2$/g. Heat treatment, pulverization, screening and battery evaluation were performed in the same way as in Example 1.

An undersize yield, a silicon element content in the negative electrode material, a BET specific surface area, a particle size, results of XPS, and the evaluation results of a battery are shown in Table 2.

[Table 2]

| | Silicon nanoparticle-containing particles (kg) | Conductive filler | | | | Index (m²/g) | Undersize yield (%) | Silicon element content in negative electrode active material (mass%) |
| | | Conductive filler 1 | | Conductive filler 2 | | | | |
| | | Kind | Weight (kg) | Kind | Weight (kg) | | | |
|---|---|---|---|---|---|---|---|---|
| Example 1 | 4.8 | Graphite particle 1 | 5.2 | -- | -- | 11.9 | 92.1 | 17.8 |
| Example 2 | 4.8 | Graphite particle 1 | 3.0 | Graphite particle 2 | 2.2 | 8.0 | 71.2 | 17.4 |
| Comparative Example 1 | 4.8 | Graphite particle 2 | 5.2 | -- | -- | 2.7 | 37.8 | 16.0 |

| | BET specific surface area (m²/g) | Particle size | | | XPS * | | | | Battery characteristics | | |
| | | $D_{10}$ (µm) | $D_{50}$ (µm) | $D_{90}$ (µm) | 103 eV (B) | 101 eV | 99 eV (A) | (A/B) | Initial discharge capacity (mAh/g) | Initial coulombic efficiency (%) | Discharge capacity retention rate after 100 cycles (%) |
|---|---|---|---|---|---|---|---|---|---|---|---|
| Example 1 | 3.0 | 4.7 | 14.7 | 38.8 | 86 | 13 | 1 | 0.01 | 879 | 88.1 | 56.7 |
| Example 2 | 1.7 | 5.8 | 18.3 | 44.3 | 76 | 17 | 7 | 0.09 | 871 | 88.7 | 65.0 |
| Comparative Example 1 | 8.6 | 3.3 | 14.4 | 41.9 | 69 | 17 | 14 | 0.20 | 817 | 87.5 | 46.3 |

* 99 eV: Si, 101 ev: Si-C and SiO$_x$, 103 eV: SiO$_2$

It can be seen from Examples 1 and 2 that a higher index determined by $\Sigma$ (BET specific surface area x mass% of the conductive filler)/(mass% of silicon nanoparticle-containing particles) in the mixed powder results in an improved undersize yield and a higher content of silicon element in the negative electrode material.

As the content of silicon element in the negative electrode material increases, the initial discharge capacity increases. In addition, the initial coulombic efficiency of 88% or more and the capacity retention rate after 100 cycles of 50% or more are attained.

When the index determined by $\Sigma$ (BET specific surface area x mass% of the conductive filler)/(mass% of silicon nanoparticle-containing particles) is less than 6 $m^2/g$ as in Comparative Example 1, the carbon precursor solidly binds to each other due to melting and the damage by pulverization remains on the surface of the negative electrode material. As a result, the specific surface area of the negative electrode material increases. In addition, the outgassing of a tar-containing gas generated by heat treatment becomes uneven, resulting in increase in the active sites (the ratio of $Si/SiO_2$) on the surface of the negative electrode material.

The appearance of a rough surface and active sites on the surface of these fine particles and the negative electrode material promotes the decomposition reaction of the electrolyte, and therefore causes decrease in the coulombic efficiency (less than 88%) and decrease in the capacity retention rate after 100 cycles (less than 50%).

**Claims**

1. A negative electrode material comprising silicon nanoparticles, amorphous carbon and graphite,
   wherein a 10% particle diameter ($D_{10}$) in a volume-based cumulative particle size distribution is from 3.5 $\mu$m to 9 $\mu$m,
   wherein a BET specific surface area is from 1 $m^2/g$ to 5 $m^2/g$,
   wherein a ratio (A/B) of the peak area (A) in the vicinity of 99 eV derived from Si to the peak area (B) in the vicinity of 103 eV derived from a silicon oxide observed by X-ray photoelectron spectroscopy is 0.01 to 0.10,
   and comprising composite particles, in which amorphous carbon comprising silicon nanoparticles are attached to the surface of the graphite particles.

2. The negative electrode material according to claim 1,
   wherein a 50% particle diameter ($D_{50}$) in a volume-based cumulative particle size distribution is from 8 $\mu$m to 25 $\mu$m; and
   wherein a 90% particle diameter ($D_{90}$) in a volume-based cumulative particle size distribution is from 20 $\mu$m to 50 $\mu$m.

3. The negative electrode material according to claim 1 or 2, wherein the silicon element content is 15 to 40 mass%.

4. A negative electrode paste, which includes the negative electrode material according to any one of claims 1 to 3.

5. A negative electrode sheet, which includes the negative electrode material according to any one of claims 1 to 3.

6. A lithium ion battery, which includes the negative electrode sheet according to claim 5.

FIG. 1

FIG. 2

FIG. 3

Fig. 4

Fig. 5

Fig. 6

(A)　　　　　　　　　　　　　　(B)

Fig. 7

# EP 3 540 829 A1

| INTERNATIONAL SEARCH REPORT | International application No. |
|---|---|
| | PCT/JP2017/038932 |

## A. CLASSIFICATION OF SUBJECT MATTER
Int.Cl. H01M4/36(2006.01)i, H01M4/133(2010.01)i, H01M4/134(2010.01)i, H01M4/38(2006.01)i, H01M4/48(2010.01)i, H01M4/587(2010.01)i

According to International Patent Classification (IPC) or to both national classification and IPC

## B. FIELDS SEARCHED

Minimum documentation searched (classification system followed by classification symbols)
Int.Cl. H01M4/36, H01M4/133, H01M4/134, H01M4/38, H01M4/48, H01M4/587

Documentation searched other than minimum documentation to the extent that such documents are included in the fields searched
| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/159935 A1 (SHOWA DENKO KABUSHIKI KAISHA) 22 October 2015, claims, paragraphs [0016]-[0057], comparative example 1 & US 2017/0040610 A1, claims, paragraphs [0028]-[0087], comparative example 1 & EP 3133678 A1 & KR 10-2016-0126017 A & CN 106233511 A | 1, 3-6<br>2-6 |
| Y | JP 2013-201125 A (MITSUBISHI CHEMICAL CORP.) 03 October 2013, paragraphs [0036], [0090]-[0091] & WO 2013/125710 A1 & CN 104115313 A & KR 10-2014-0128307 A | 2-6 |
| A | JP 2007-165293 A (JFE CHEMICAL CORPORATION) 28 June 2007, paragraphs [0013]-[0015] (Family: none) | 1-6 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 December 2017 (11.12.2017) | 26 December 2017 (26.12.2017) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

20

**INTERNATIONAL SEARCH REPORT**

International application No.

PCT/JP2017/038932

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-79727 A (TORAY INDUSTRIES, INC.) 23 April 2015, paragraph [0023] (Family: none) | 1-6 |
| A | JP 2008-171813 A (SAMSUNG SDI CO., LTD.) 24 July 2008, paragraph [0013], example 1 & US 2008/0166634 A1, paragraphs [0022], [0024], example 1 & US 2011/0024676 A1 & KR 10-0851969 B1 & CN 101232093 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5158460 B
- JP 2003223892 A
- JP 5809200 B
- WO 2012000858 A1
- WO 2014003135 A1

**Non-patent literature cited in the description**

- **TOKICHI NODA ; MICHIO INAGAKI.** Material of The 117th Committee. Japan Society for The Promotion of Science, 1963, 117-71, A-1
- **MICHIO INAGAKI et al.** Material of The 117th Committee. Japan Society for The Promotion of Science, 1972, 117-121, C-5
- **MICHIO INAGAKI.** *Carbon,* 1963, vol. 36, 25-34